Europäisches Patentamt

European Patent Office

Office européen des brevets

(19)

(11) Veröffentlichungsnummer: **0 063 761**
**A1**

# EUROPÄISCHE PATENTANMELDUNG

(12)

(21) Anmeldenummer: 82103214.1

(22) Anmeldetag: 16.04.82

(51) Int. Cl.³: **G 01 B  11/24,** G 01 B  11/30, G 02 B  27/17, G 01 N  21/90

(30) Priorität: 18.04.81 DE 3115634

(43) Veröffentlichungstag der Anmeldung: 03.11.82
Patentblatt 82/44

(84) Benannte Vertragsstaaten: **AT BE CH FR GB IT LI LU NL SE**

(71) Anmelder: **Feldmühle Aktiengesellschaft,
Fritz-Vomfelde-Platz 4, D-4000 Düsseldorf 11 (DE)**

(72) Erfinder: **Haubold, Wolfgang, Kollwitzstrasse 73,
D-4800 Bielefeld 1 (DE)**

(74) Vertreter: **Uhlmann, Hans, Dr. rer.nat., Dipl.-Chem.,
Gladbacher Strasse 189, D-4060 Viersen 1 (DE)**

(54)  Verfahren und Vorrichtung zum Prüfen von durch Kreislinien begrenzten Flächen.

(57)  Beim Prüfen von durch Kreislinien begrenzten Flächen, wie beispielsweise optischen Linsen, auf Abweichungen der Kreisform und auf Oberflächenfehler, wird ein Lichtstrahl (15) auf einen rotierenden Spiegel, die Stirnfläche (23) einer Rotorwelle (21), geleitet und von diesem zu einem Abtastkreis, dessen Durchmesser geringfügig kleiner als der Durchmesser des Prüflings (12) ist, abgelenkt. Der von diesem reflektierte Strahl (15'''') wird aufgefangen und einem Fotoumwandler (3) zugeführt, der seine Impulse an eine Auswertestation (4) weitergibt. In der Auswertestation (4) werden die pro Abtastung erhaltenen Impulse gezählt und bei mehr als zwei Impulsen pro Abtastung eine Fehleranzeige ausgelöst. Der Kreisdurchmesser des Abtastkreises ist in seiner Größe wählbar, ebenso ist die Strichbreite des Abtastkreises einstellbar.

0063761

Anmelder: Feldmühle Aktiengesellschaft,
Fritz-Vomfelde-Platz 4, 4ooo Düsseldorf 11

Verfahren und Vorrichtung zum Prüfen von
durch Kreislinien begrenzten Flächen.

Die Erfindung betrifft ein Verfahren und eine Vorrichtung zum Prüfen von durch Kreislinien begrenzten Flächen, wie optischen Linsen, gestanzten Rundlinge, Flaschenhälsen und Münzen auf Abweichungen von der Kreisform und auf Oberflächenfehler. Gegenstände der vorgenannten Art sind Massenprodukte, die durch Stanzen oder Pressen gefertigt werden, wobei es häufig durch Stockungen im Materialfluß vorkommt, daß Teile entstehen, die keine absolute kreisförmige Begrenzung aufweisen.
Werden beispielsweise Scheiben aus Blechstreifen gestanzt, so haben diese Blechstreifen eine bestimmte Länge und es kann sich beim Übergang von einem Blechstreifen zum nachfolgenden der Fall ergeben, daß die Schnitt- bzw. Stanzlinie exakt zwischen Ende des ersten Blechstreifens und Anfang des zweiten Blechstreifens fällt. In einem solchen Fall entstehen also zwei Kreissegmente, die Ausschuß sind. Ebenso kann es vorkommen, daß der Bandtransport hakt, d.h. das Blechband nicht mit der erforderlichen Geschwindigkeit nach dem Ausstanzen unter dem Stempel hergezogen wird, also für den nächsten Stanzvorgang nicht die korrekte Lage erreicht, wodurch sich bei diesem Stanzvorgang - auf Grund des

- 2 -

fehlenden Materials - eine sichelförmige Scheibe ergibt, die ebenfalls Ausschuß ist.

Außer der Überprüfung auf die absolute Kreisform ist in vielen Fällen auch eine Überprüfung der Oberfläche erforderlich. So können bei dem hier beispielsweise erwähnten Blechstreifen Walzfehler im Blech vorhanden sein, die von Schlackeneinschlüssen oder Zunder herrühren. Auch können die Bleche Kratzer aufweisen, die eine Weiterverarbeitung verbieten.

Analog liegen die Verhältnisse bei Flaschenhalsköpfen und optischen Linsen, die auch in großen Mengen produziert werden. Beim Prüfen von optischen Linsen ist außer der Kreisform und der Oberfläche von Bedeutung, ob ggf. im Glas Einschlüsse vorhanden sind und ob die Linsenform den geometrischen Anforderungen entspricht, d.h., ob beim Linsenrohling die Toleranzen so liegen, daß beim nachfolgenden Schleifen keine Linse mit optischen Fehlern entsteht. Ebenso soll bei der Prüfung geschliffener Linsen festgestellt werden, ob die Linse optische Fehler aufweist. Damit ergibt sich das Problem, die bisher übliche Sichtprüfung, die sehr personalaufwendig ist, durch eine maschinelle Prüfung zu ersetzen, bei der die einzelnen Prüflinge mit hoher Geschwindigkeit geprüft und aussortiert werden können.

Diese Aufgabe wird gelöst durch ein Verfahren zum Prüfen von durch Kreislinien begrenzte Flächen, wie optischen Linsen, gestanzten Rundlingen, Flaschenhälsen und Münzen auf Abweichungen von der Kreisform und auf Oberflächenfehler, mit dem kennzeich-

- 3 -

nenden Merkmal, daß ein Lichtstrahl auf einen rotierenden Spiegel geleitet, von diesem zu einem Abtastkreis, dessen Durchmesser geringfügig kleiner als der Durchmesser des Prüflings ist, abgelenkt, das reflektierte Licht aufgefangen und einem Fotoumwandler zugeführt wird, der seine Impulse an eine Auswertestation weitergibt.

Durch den Einsatz eines Lichtstrahles und die Verwendung eines rotierenden Spiegels ergeben sich extrem hohe Abtastgeschwindigkeiten, wie sie für das Prüfen von Massengütern erforderlich sind. Durch den Spiegel wird ein rotierender Lichtpunkt geschaffen, der in der Prüfebene einen Abtastkreis bildet, wobei die Strichbreite dieses Abtastkreises vom Durchmesser des Lichtpunktes abhängig ist.
Je feiner der Lichtpunkt, desto höher ist die Lichtintensität, desto genauer können damit auch feine Abweichungen von der Kreisform erfaßt werden. Wesentlich ist dabei, daß der Abtastkreisdurchmesser geringfügig kleiner als der Durchmesser des Prüflings ist, damit der Abtaststrahl nicht durch Ablenkungen an den Kanten Fehlersignale auslöst, ohne daß am Prüfling ein Fehler vorhanden ist. Das vom Prüfling reflektierte Licht wird aufgefangen und einem Fotoumwandler, zweckmäßig einem Fotodetektor, zugeführt, der es in Impulse entsprechend der reflektierten Helligkeit umwandelt und diese Impulse an eine Auswertestation weitergibt.

Bei einem fehlerfreien Prüfling wird über dem gesamten Randbereich bei der Abtastung eine gleichmäßige Helligkeit und damit eine gleichmäßig hohe Reflektion erzielt. Als Zeichen für Fehlerfreiheit

- 4 -

kann also in der Auswertestation die Tatsache gewertet werden, daß keine Schwankungen in der Lichtstärke auftreten.

Das vorbeschriebene Prüfungsverfahren setzt voraus, daß der Prüfling der Prüfeinrichtung zugeführt und unter ihr zentriert wird, wobei die Prüfung im ruhenden Zustand des Prüflings erfolgt. Um eine noch höhere Prüfgeschwindigkeit zu erhalten, geht ein weiterer, sehr vorteilhafter Vorschlag der Erfindung dahin, in der Auswertestation die pro Abtastung erhaltenen Impulse zu zählen und bei mehr als zwei Impulsen pro Abtastung eine Fehleranzeige auszulösen. Bei dieser modifizierten Art der Prüfung ist es nicht erforderlich, daß der Prüfling im Stillstand geprüft wird, vielmehr ist es möglich, daß der Prüfling kontinuierlich unter der Prüfvorrichtung hinwegbewegt wird, wobei auch keine Zentrierung, sondern gemäß einer bevorzugten Ausgestaltung der Erfindung lediglich eine Ausrichtung unterhalb des rotierenden Spiegels erfolgt, d.h., daß die Prüflinge in einer Reihe ausgerichtet kontinuierlich hintereinander die Prüfvorrichtung unterhalb des rotierenden Spiegels passieren. Wandert dabei der Prüfling in das Prüffeld ein, so ergibt sich beim Abtasten ein Impuls beim Auftreffen des Strahles auf die Kante des Prüflings und ein weiterer Impuls beim Verlassen des Prüflings wieder an der Kante. Diese beiden Kantenimpulse treten so lange auf, bis der Prüfling voll im Bereich des Abtastkreises liegt. In diesem Fall tritt kein Kantenimpuls mehr auf. Ist der Prüfling jedoch beschädigt, so tritt außer den beiden Kantenimpulsen mindestens ein weiterer Impuls von der Beschädigungsstelle, beispiels-

- 5 -

weise einer Kreisausnehmung durch eine Fehlstanzung oder durch einen Oberflächenfehler auf. In diesem Falle ergeben sich bei jeder Spiegelumdrehung im Bereich der Fehlstelle z.B. vier Impulse, da der Abtaststrahl vier Kanten überstreicht.
Befindet sich in dem Prüfling ein Schnitt, so bestreicht der Abtaststrahl drei Kanten, da die Schnittstelle auch eine Kante formt. Gleiches gilt bei der Erfassung von Oberflächenfehlern. Für Prüfungen dieser Art ergibt sich also eine sehr einfache Auswerteeinrichtung, bei der einfach die pro Abtastung anfallenden Impulse gezählt und bei Überschreiten von zwei Impulsen pro Abtastzyklus, d.h. pro Umdrehung des rotierenden Spiegels, ein Fehlersignal ausgelöst wird.

Wesentlich für die Beurteilung der Qualität des Prüflings ist dabei, daß im Mittelbereich, also in dem Bereich, in dem der Prüfling mit einem vollen Kreis abgetastet wird, der nicht über seine Begrenzungskanten hinausgeht, kein Impuls ausgelöst wird, d.h., daß keine Deformation von der Kreislinie vorliegt. Nur in diesem Fall ist der Prüfling einwandfrei. Die Auswerteeinrichtung signalisiert also auch dann einen Fehler, wenn die Kreisform des Prüflings nicht korrekt eingehalten wird.

Eine zweckmäßige Ausgestaltung der Erfindung sieht vor, daß der Kreisdurchmesser des Abtastkreises wählbar ist. Diese Wählbarkeit ist von großer Bedeutung, weil beispielsweise beim Prüfen von Scheiben oder auch Münzen die verschiedensten Durchmesser anfallen, so daß es zweckmäßig ist, mit ein und demselben Aggregat möglichst viele Durchmesser

- 6 -

abtasten und damit überprüfen zu können. Die einfachste Möglichkeit zur Durchmesseränderung des Abtastkreises besteht in der Vergrößerung bzw. Verkleinerung des Abstandes zwischen Spiegel und Prüfling. Man wird diese Möglichkeit immer dann wählen, wenn keine zu großen Unterschiede in den Durchmessern vorhanden sind, die große Entfernungsunterschiede bedingen und damit zu erheblichen Änderungen in der Lichtintensität führen.

Besonders beim Abtasten von Flaschenhälsen, genauer gesagt von Köpfen der Flaschenhälse, auf die Kronenkorken aufgebracht werden sollen, ist es wichtig, daß auch der Bereich, der sich unmittelbar an die Außenkante anschließt, frei von Fehlern ist. Eine vorteilhafte Ausgestaltung der Erfindung sieht daher vor, daß die Breite des Abtastkreises einstellbar ist. Zweckmäßig erfolgt daher die Abtastung mit einem querverstreckten Lichtfleck. Je nach dem Verstreckungsgrad des Lichtfleckes ist die Strichbreite des Abtastkreises mehr oder weniger groß, wobei dadurch, daß der Lichtstrich als solcher sehr schmal gehalten wird, auch für die nötige Lichtintensität gesorgt ist.

Eine bevorzugte Vorrichtung zur Durchführung des Verfahrens besteht im wesentlichen aus einer Förderstrecke mit darüber angeordnetem Meßkopf, einem Fotoumwandler und einer Auswertevorrichtung und ist dadurch gekennzeichnet, daß der Meßkopf einen Strahler enthält, dem ein rotierender, schrägstehender Spiegel zugeordnet ist. Als Strahler eignen sich punktförmige Lichtquellen, wie beipsielsweise Halogenlampen. Zweckmäßig werden jedoch Laserstrahler eingesetzt, weil bei diesen bereits eine Bündelung des Strahles vorliegt, der im wesentlichen parallel austritt und dadurch keine Optik zur Bündelung und Erzeugung eines Lichtpunktes auf dem rotierenden Spiegel benötigt. Der rotierende, schrägstehende Spiegel als solcher ist, weil er nur einen Lichtpunkt umleiten muß, relativ klein.

Die Drehzahl des rotierenden Spiegels beträgt gemäß einer zweckmäßigen Ausgestaltung der Erfindung 3ooo bis 30ooo Umdrehung/Min.
Die hohen Geschwindigkeiten gestatten, die Förderstrecke auch mit einer hohen Geschwindigkeit laufen zu lassen und damit den Durchsatz großer Stückzahlen, wie er für Massengüter gewünscht wird.

Um die Lichtintensität des fliegenden Lichtpunktes, der auf Grund der Rotation des Spiegels den Abtastring bildet, möglichst hoch zu belassen, weil durch die hohe Lichtintensität eine gute Auswertbarkeit auch kleiner Fehler gegeben ist, sieht eine zweckmäßige Ausgestaltung der Erfindung vor, daß der Spiegel in seiner Winkelstellung verstellbar ist. Durch die Verstellbarkeit des Spiegels kann mit relativ einfachen Mitteln der Durchmesser des Abtastringes geändert werden, ohne daß eine wesentliche Verlängerung des Strahlenweges erfolgt, d.h., ohne daß wesentliche Lichteinbußen auftreten.

Aus dem gleichen Grunde, also der Erhaltung der Lichtintensität, wird gemäß einer bevorzugten Ausgestaltung der Erfindung für den Fall, daß die Strichbreite des Abtastkreises größere Abmessungen als der eigentliche abtastende Lichtstrich aufweisen

soll, vorgeschlagen, den Spiegel mit einer Vibrationsvorrichtung zu versehen. Der von dem Laserstrahler erzeugte fliegende Lichtstrich wird jetzt also einmal durch das rotierende Rohr um seine Achse gedreht, zum anderen durch den beweglich in dem Rohr montierten Spiegel über die Vibrationsvorrichtung um einen bestimmten Betrag auf- und abbewegt, so daß sich statt einer kreisförmigen Abtastung eine Abtastung in Form eines Zick-Zack-Bandes ergibt, das ebenfalls Kreisform aufweist, wobei jedoch entsprechend der Frequenz der Vibrationsvorrichtung die Zick-Zack-Strahlen so dicht aneinander liegen, daß sie sich überschneiden oder, falls das für den jeweiligen Anwendungszweck günstiger ist, in einem geringen Abstand nebeneinander verlaufen, wobei durch diesen Abstand gleichzeitig die Größe des Fehlers vorgegeben ist, der noch für den Anwendungszweck akzeptiert werden kann. Zweckmäßig liegt daher die Frequenz, mit der der Spiegel vibriert, bei dem 10- bis 100-fachen der Drehzahlfrequenz.

Eine bevorzugte Ausgestaltung der Erfindung sieht vor, daß die Stirnfläche der Rotorwelle eines Motors als schrägstehender Spiegel ausgeführt ist. Die Stirnfläche der Rotorwelle kann dabei direkt verspiegelt sein, es kann aber auch auf diese Fläche ein Spiegel aufgebracht werden, der dann in der jeweils erforderlichen Neigung zur Erreichung einer bestimmten Abtastkreisgröße eingestellt wird. Bei beiden Konstruktionen ist es erforderlich, daß der vom Strahler erzeugte Lichtstrich über Spiegel oder Prismen auf den schrägstehenden Spiegel geleitet wird, ehe er von diesem zur Kreislinie abge-

- 9 -

lenkt werden kann.

Eine zweckmäßige alternative Lösung sieht vor, daß der rotierende Spiegel innerhalb eines, die Rotorwelle eines Motors bildenden Rohres angeordnet ist. Da der rotierende, schrägstehende Spiegel als solcher nur sehr klein ist, ergibt sich die Möglichkeit, ihn innerhalb eines Rohres mit kleinem Durchmesser anzuordnen und so den Aufwand für Prismen oder Spiegel zur Umleitung des Lichtpunktes auf den Spiegel zu vermeiden. Es genügt in diesem Falle den Strahler direkt oberhalb des Motors anzuordnen, so daß er auf kürzestem Wege direkt in die Rotorwelle des Motors strahlt und den Lichtpunkt auf dem Spiegel abbildet.

Eine bevorzugte Ausgestaltung der Erfindung sieht vor, daß der Motor von einem verspiegelten, durch eine lichtstreuende Scheibe abgeschlossenen Raum umgeben ist, dem ein Fotoumwandler zugeordnet ist. Der Motor bildet dabei das zentrische Teil des Meßkopfes, durch den die Strahlung nach außen gelangt. Er ist, da er keine antreibende Funktion hat, sehr klein zu dimensionieren, so daß der ihn umgebende Raum im Meßkopf voll zur Aufnahme von Meßaggregaten usw. zur Verfügung steht. Durch die Kombination, diesen Raum, der ihn umgibt, allseitig - ausgenommen die dem Prüfobjekt zugewandte Seite - zu verspiegeln und gleichzeitig durch eine lichtstreuende Scheibe abzuschließen ist es möglich, das vom Prüfling direkt reflektierte Licht in diffuses Licht umzuwandeln, was die Erfassung von Fehlern auf hochglänzenden, spiegelnden Prüflingen ermöglicht, und gleichzeitig auch diffus abgestrahltes

- 10 -

Licht zu sammeln und dem Fotoumwandler zuzuführen.
Durch die Vermeidung des Eintritts von direkt reflektiertem Licht tritt keine Überlastung des Fotoumwandlers auf, d.h., es werden Spitzen, die zu
einer Überlastung des Aggregates führten, vermieden.

Eine bevorzugte Ausgestaltung der Erfindung sieht
vor, daß dem rotierenden Spiegel ein stationärer
Spiegel zugeordnet ist, der ihn ringförmig umgibt.
Zweckmäßig kann der stationäre Spiegel ein konischer
Ring sein. Vorteilhaft ist auch die Ausführung als
Parabolspiegel.

Sowohl die Ausführung als konischer Ring als auch
als Parabolspiegel ermöglichen die Erzeugung eines
parallel zur Rotorwelle verlaufenden Abtaststrahles,
d.h. eines Strahles, der senkrecht auf den Prüfling
auftrifft. Dieses senkrechte Auftreffen ist besonders beim Abtasten von optischen Linsen von Bedeutung, in denen der Strahl abgelenkt wird und beispielsweise bei der Prüfung von bikonvexen Linsen
zu einem Punkt fokussiert. Bei der Prüfung optischer Linsen ist es damit möglich, zusätzlich
Schliffehler, also optische Fehler zu erfassen und
in dem Fall ein Fehlersignal auszulösen, wenn die
Fokussierung des Lichtpunktes vom Sollwert abweicht.
Ein weiterer großer Vorteil dieser Ausgestaltung
ist, daß durch einfache Höhenverstellung des rotierenden, schräggestellten Spiegels zum stationären,
ringförmigen Spiegel eine Vergrößerung oder Verkleinerung des Abtastkreises erfolgt, was eine sehr
schnelle Einstellung beim Wechsel der Durchmesser
der zu prüfenden Aggregate ermöglicht.

- 11 -

Eine weitere zweckmäßige Ausgestaltung der Erfindung sieht vor, daß dem rotierenden Rohr ein durchbohrter Spiegel nachgeschaltet ist, dem zweckmäßig
auf dem Weg zum Prüfling eine Lochblende folgt.
Der durchbohrte Spiegel steht dabei unter einem
schrägen Winkel zum Prüfling und ermöglicht dem
durch den rotierenden Spiegel abgelenkten Strahl
das Durchtreten durch die Bohrung auf den Prüfling.
Das vom Prüfling reflektierte Licht fällt auf Grund
der Ablenkung durch den Prüfling auf den Spiegel
und wird von diesem in Richtung des Fotoumwandlers,
ggf. unter Zwischenschaltung einer Sammellinse,
abgelenkt. Der Einsatz einer Lochblende zwischen
durchbohrtem Spiegel und Prüfling ermöglicht, lediglich das diffus reflektierte Licht auszuwerten,
das direktreflektierte also auszublenden. Diese
Vorrichtung ist besonders bei stark spiegelnden
Prüflingen vorzuziehen, weil dadurch vermieden wird,
daß der Fotoumwandler zu große Helligkeitsunterschiede aufnehmen können muß.

Die Erfindung wird nachstehend an Hand der Zeichnungen beschrieben.

Die Fign. 1 und 6 zeigen schematisch den Aufbau
eines Meßkopfes im Schnitt;
die Fign. 2 und 4 den Verlauf des Abtastvorganges;
die Fign. 3 und 5 Details des Meßkopfes.

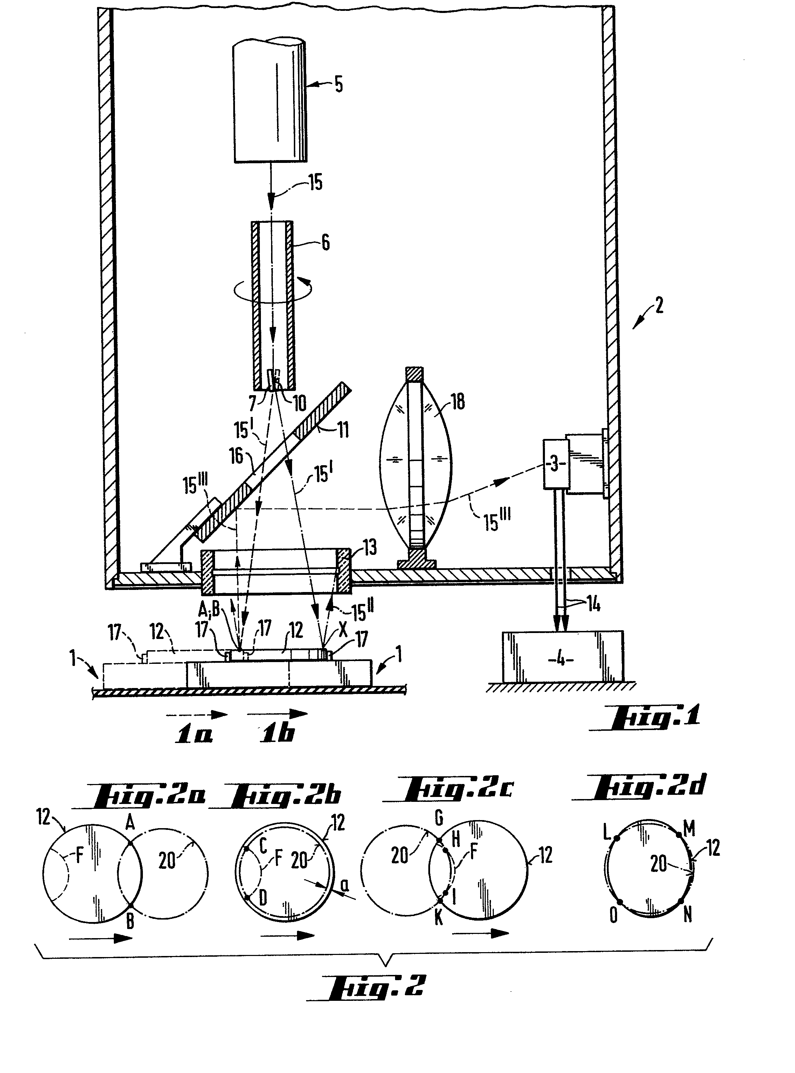

Auf einer Förderstrecke 1 wird der Prüfling 12 unter den Meßkopf 2 geführt, der über die Leitung 14
mit der Auswertevorrichtung 4 verbunden ist. Im
Meßkopf 2 ist der Strahler 5 angeordnet, der als
Laserstrahler ausgeführt ist und einen Strahl 15 auf den schrägstehenden Spiegel 7 im rotierenden Rohr 6 wirft. Der Strahl 15 wird vom schrägstehenden Spiegel 7 als reflektierter Strahl 15' abgeleitet und tritt durch die Bohrung 16 des durchbohrten Spiegels 11. Nach Passieren der Lochblende 13 fällt der reflektierte Strahl 15' auf den Prüfling 12, der durch seitliche Führungen 17, die an der Förderstrecke 1 angeordnet sind, in den Abtastbereich geführt wird. Der vom Prüfling 12 reflektierte Strahl 15'' wird in der Lochblende 13 ausgeblendet, wenn kein Fehler am Prüfling 12, d.h. z.B. bei X der Einfallswinkel gleich dem Ausfallswinkel ist. Das diffus reflektierte Licht 15''' gelangt auf den durchbohrten Spiegel 11 und wird auf eine Sammellinse 18 geworfen, die das reflektierte Licht auf den Fotoumwandler 3 fokussiert. Diffus heißt, daß Lichtstrahl 15 bei A, B oder Fehler nicht nur unter Einfallswinkel reflektiert wird, sondern ein Teilstrahlbündel (Strahl 15''') unter einem anderen Winkel reflektiert wird und somit die Lochblende 13 passieren kann (Fig.1).

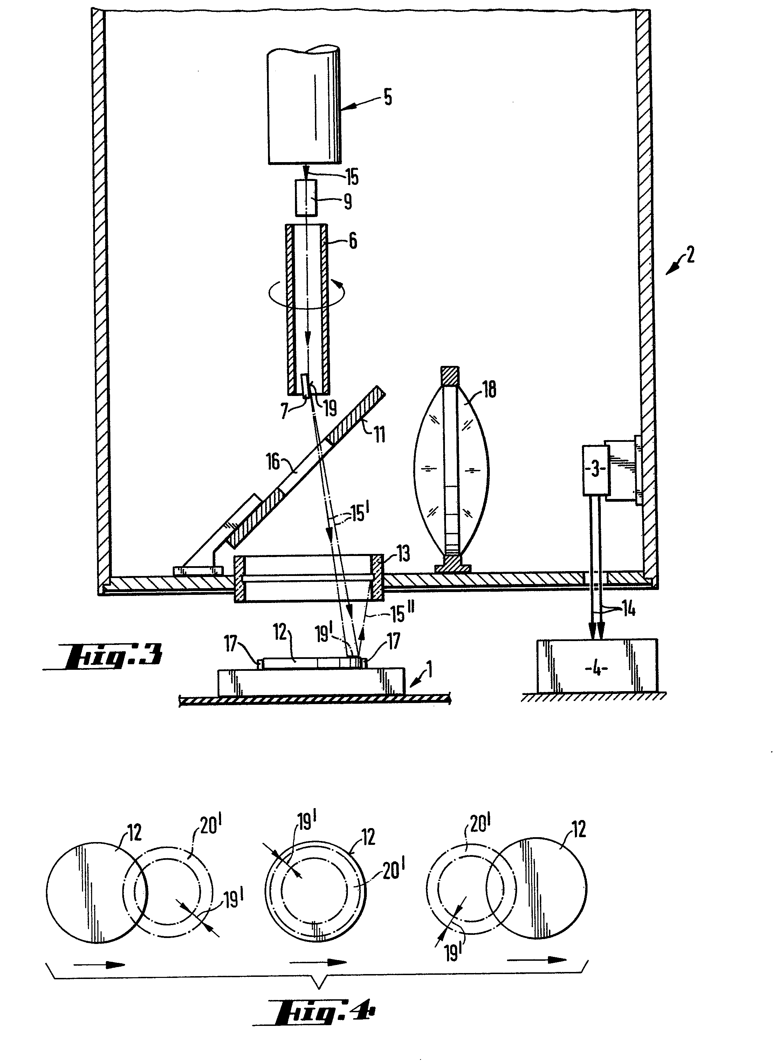

In Fig. 2 sind verschiedene Prüfsitiationen gezeigt.

Fig. 2a zeigt das Einfahren des Prüflings 12 in den Bereich der Abtastlinie 2o. Dabei ergeben sich bei einem ordnungsgemäßen Prüfling zwei Abtastorte A/B, welche entsprechend diffuse Lichtimpulse 15''' an den Fotoumwandler 3 melden (siehe auch Fig. 1).

Fig. 2b zeigt den unter den Abtaststrahl 2o eingefahrenen Prüfling 12.
Der in Wirklichkeit sehr geringe Abstand a zwischen Abtastlinie 2o und der Außenkontur des Prüf-lings 12 ist überall etwa gleich groß, das bedeutet, im Bereich des Toleranzfeldes ist der Prüfling rund und für gut befunden. Es ergeben sich in
dieser Stellung also keine diffusen Lichtmeldungen
15'''. Tritt ein Fehler F auf, so ergeben sich die
zwei Meldepunkte C und D, die in dieser Stellung
noch nicht zur Aussortierung führen.

Erst in Fig. 2c - diese Figur zeigt das Ausfahren
des Prüflings 12 aus der Meßvorrichtung - treten
am Prüfling bei vorhandenem Fehler F zwei zusätzliche Meldepunkte, d.h. insgesamt vier Meldepunkte
G, H, I, K auf. Dies führt zur Aussortierung.

Fig. 2d zeigt die Feststellung eines unrunden Prüflings. Es ist klar ersichtlich, daß dabei die Abtastlinie 2o vier Meldepunkte L, M, N, O erfaßt.

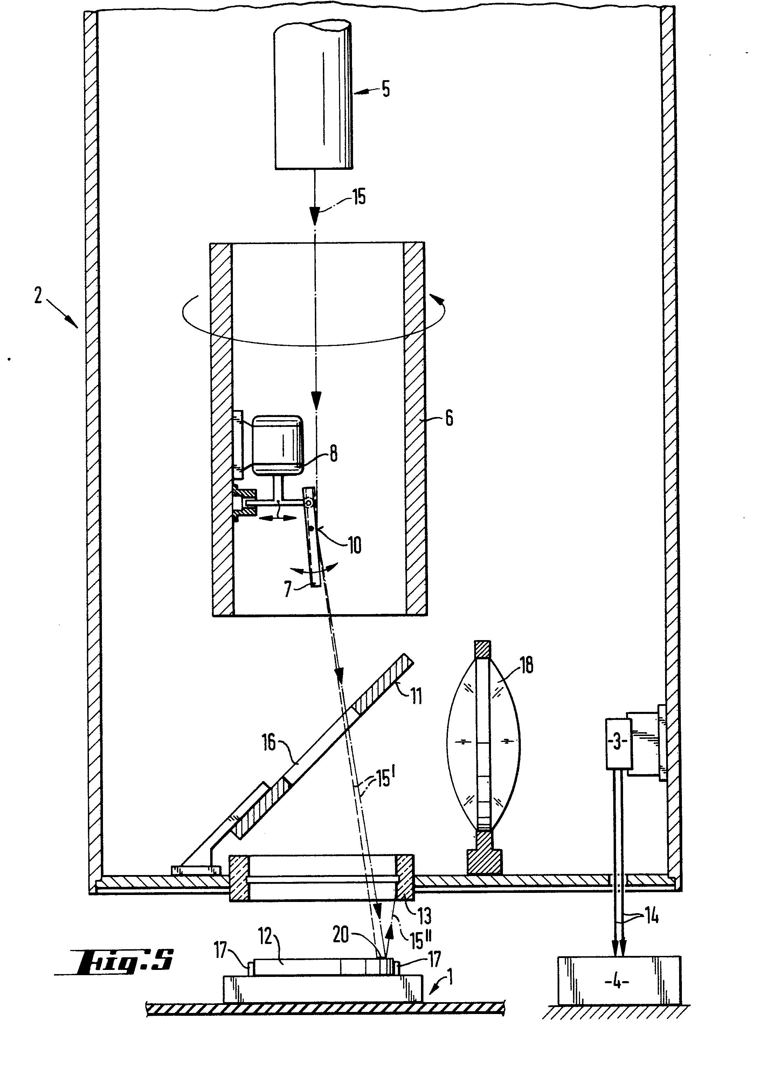

Eine zwischen den Strahler 5 und das rotierende
Rohr 6 geschaltete Optik 9 (Fig. 3) verstreckt bzw.
weitet den Lichtpunkt lo quer zu einem Lichtstrich
19 auf. Dieser Lichtstrich 19 wird, wie vorgehend
schon beschrieben, auf den schrägstehenden Spiegel
7 geleitet und bildet auf Grund der Rotation des
rotierenden Rohres 6 in der Prüfebene eine Abtastlinie 2o', deren Strichstärke der Querverstreckung
entspricht.

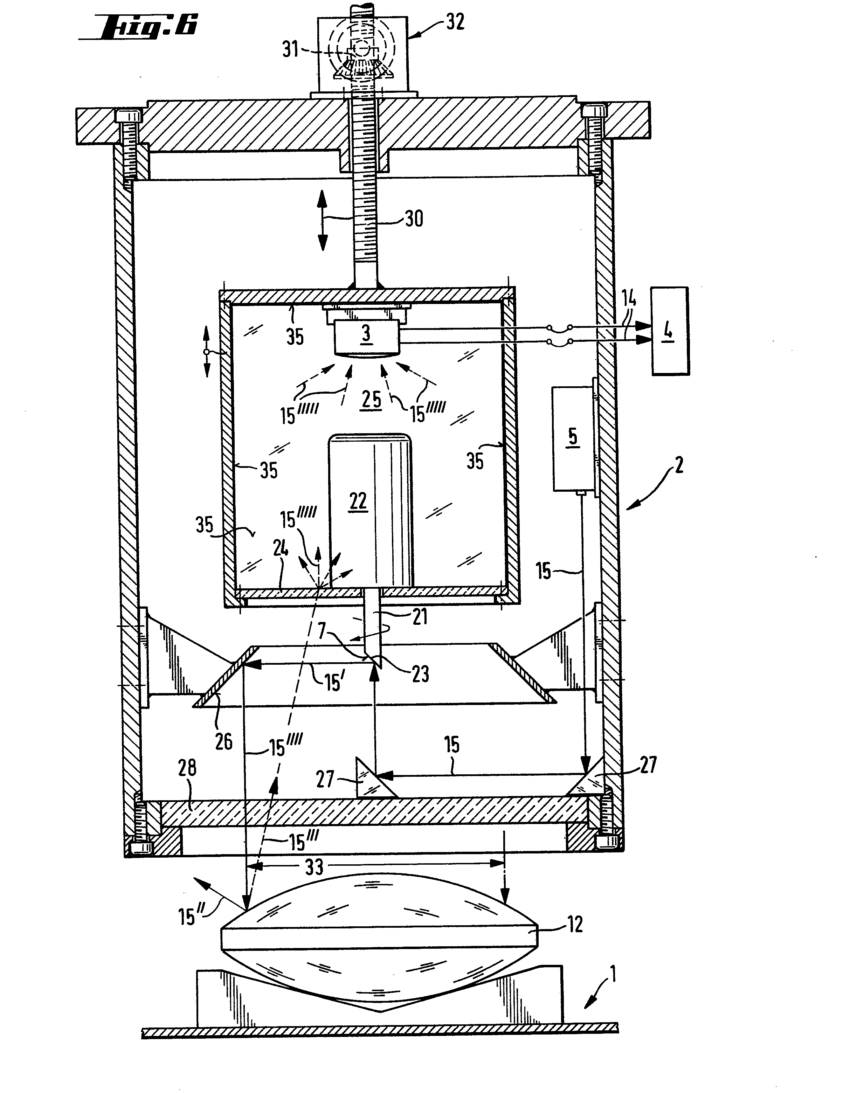

Fig. 5 zeigt im Detail die Vibrationsvorrichtung 8,
die mit dem gelenkig im rotierenden Rohr 6 angeordneten, schrägstehenden Spiegel 7 in Eingriff steht.
Wie Fig. 5 zeigt, ist in diesem Fall zwischen dem
Strahler 5 und dem rotierenden Rohr 6 keine Optik 9
angeordnet, die den Lichtpunkt lo zum Lichtstrich 19 querverstreckt. Die Breite der Abtastlinie 2o ergibt sich in diesem Fall durch die Bewegung des schrägstehenden Spiegels 7, die durch die Vibrationsvorrichtung 8 hervorgerufen wird.

Fig. 6 zeigt, daß der Fotoumwandler 3 in einem allseits an seinen Innenflächen verspiegelten Raum 25 angeordnet ist, der von einer lichtstreuenden Scheibe 24 abgedeckt ist. In dem verspiegelten Raum 25 befindet sich auch der Motor 22, dessen Rotorwelle 21 aus dem Raum durch die lichtstreuende Scheibe 24 herausragt. Die Stirnfläche 23 der Rotorwelle 21 ist abgeschrägt und bildet oder trägt den schrägstehenden Spiegel 7. Durch den im Meßkopf 2 innen angeordneten Strahler 5 wird ein Strahl 15 auf ein Prisma 27 geworfen, auf ein zweites Prisma 27 abgelenkt und von diesem auf den schrägstehenden Spiegel 7 geworfen. Der vom schrägstehenden Spiegel 7 reflektierte Strahl 15' fällt auf den stationären Spiegel 26, der die Rotorwelle 21 konuförmig umgibt, und wird von diesem Spiegel 26 etwa senkrecht nach unten - 15'''' - auf den Prüfling 12, in diesem Falle eine bikonvexe Linse, abgelenkt. Er passiert dabei die Abdeckscheibe 28, die den Meßkopf 2 nach unten verschließt.

Das vom Prüfling 12 reflektierte Licht wird, soweit es nicht schon als diffuses Licht vorliegt, von der lichtstreuenden Scheibe 24 in diffuses Licht 15''''' verwandelt und tritt in den bei 35 verspiegelten Raum 25 ein. Es wird hier vom Fotoumwandler 3 erfaßt. Die daraus resultierenden Impulse werden über Leitung 14 der Auswertevorrichtung 4 zugeleitet. Durch einfache Höhenverstellung, z.B. über Spindel 3o, Spindelmutter 31 und Antrieb 32

- 15 -

ist der Spiegel 7 relativ zum Spiegel 26 höhenverstellbar; damit ist eine Verstellung des Prüfkreisdurchmessers 33 gegeben.

0063761

- 16 -

Anmelder: Feldmühle Aktiengesellschaft,
Fritz-Vomfelde-Platz 4, 4ooo Düsseldorf 11

Patentansprüche

1. Verfahren zum Prüfen von durch Kreislinien begrenzten Flächen, wie optischen Linsen, gestanzten Rundlingen, Flaschenhälsen und Münzen auf
Abweichungen von der Kreisform und auf Oberflächenfehler, dadurch gekennzeichnet, daß ein
Lichtstrahl auf einen rotierenden Spiegel geleitet, von diesem zu einem Abtastkreis, dessen
Durchmesser geringfügig kleiner als der Durchmesser des Prüflings ist, abgelenkt, das reflektierte Licht aufgefangen und einem Fotoumwandler
zugeführt wird, der seine Impulse an eine Auswertestation weitergibt.

2. Verfahren nach Anspruch 1, dadurch gekennzeichnet, daß in der Auswertestation die pro Abtastung
erhaltenen Impulse gezählt und bei mehr als zwei
Impulsen pro Abtastung eine Fehleranzeige ausgelöst wird.

3. Verfahren nach einem der Ansprüche 1 und 2, dadurch gekennzeichnet, daß die Prüflinge kontinuierlich einer Prüfvorrichtung zugeführt und unterhalb dieser in ihrer Position ausgerichtet
werden.

4. Verfahren nach einem der Ansprüche 1 bis 3, dadurch gekennzeichnet, daß der Kreisdurchmesser des Abtastkreises in seiner Größe wählbar ist.

5. Verfahren nach einem der Ansprüche 1 bis 4, dadurch gekennzeichnet, daß die Strichbreite des Abtastkreises einstellbar ist.

6. Verfahren nach einem der Ansprüche 1 bis 5, dadurch gekennzeichnet, daß die Abtastung mit einem querverstreckten Lichtfleck erfolgt.

7. Vorrichtung zur Durchführung des Verfahrens nach einem der Ansprüche 1 bis 6, im wesentlichen bestehend aus einer Förderstrecke (1) mit darüber angeordnetem Meßkopf (2), einem Fotoumwandler (3) und einer Auswertevorrichtung (4), dadurch gekennzeichnet, daß der Meßkopf (2) einen Strahler (5) enthält, dem ein rotierender, schrägstehender Spiegel (7) zugeordnet ist.

8. Vorrichtung nach Anspruch 7, dadurch gekennzeichnet, daß die Drehzahl des rotierenden Spiegels (7) 3000 bis 30.000 Umdrehungen/Min. beträgt.

9. Vorrichtung nach einem der Ansprüche 7 und 8, dadurch gekennzeichnet, daß der rotierende Spiegel (7) innerhalb eines, die Rotorwelle (21) eines Motors (22) bildenden Rohres (6) angeordnet ist.

1o. Vorrichtung nach einem der Ansprüche 7 und 8, dadurch gekennzeichnet, daß die Stirnfläche (23) der Rotorwelle (21) als schrägstehender Spiegel (7) ausgeführt ist.

11. Vorrichtung nach einem der Ansprüche 7 bis 1o, dadurch gekennzeichnet, daß der Motor (22) von einem verspiegelten, durch eine lichtstreuende Scheibe (24) abgeschlossenen Raum (25) umgeben ist, dem ein Fotoumwandler (3) zugeordnet ist.

12. Vorrichtung nach einem der Ansprüche 7 bis 11, dadurch gekennzeichnet, daß dem rotierenden Spiegel (7) ein stationärer Spiegel (26) zugeordnet ist, der ihn ringförmig umgibt.

13. Vorrichtung nach einem der Ansprüche 7 bis 12, dadurch gekennzeichnet, daß der stationäre Spiegel (26) ein konischer Ring ist.

14. Vorrichtung nach einem der Ansprüche 7 bis 12, dadurch gekennzeichnet, daß der stationäre Spiegel (26) ein Parabolspiegel ist.

15. Vorrichtung nach einem der Ansprüche 7 bis 14, dadurch gekennzeichnet, daß der schrägstehende Spiegel (7) in seiner Winkelstellung verstellbar ist.

16. Vorrichtung nach einem der Ansprüche 7 bis 15, dadurch gekennzeichnet, daß der schrägstehende Spiegel (7) mit einer Vibrationsvorrichtung (8) versehen ist.

17. Vorrichtung nach einem der Ansprüche 7 bis 16, dadurch gekennzeichnet, daß dem Strahler (5) eine Optik (9) zur Querverstreckung des erzeugten Lichtpunktes (1o) vorgeschaltet ist.

18. Vorrichtung nach einem der Ansprüche 7 bis 17, dadurch gekennzeichnet, daß dem rotierenden Rohr (6) ein durchbohrter Spiegel (11) nachgeschaltet ist.

19. Vorrichtung nach einem der Ansprüche 7 bis 18, dadurch gekennzeichnet, daß zwischen dem durchbohrten Spiegel (11) und einem Prüfling (12) eine Lochblende (13) angeordnet ist.

*Fig.1*

*Fig.2a*   *Fig.2b*   *Fig.2c*   *Fig.2d*

*Fig.2*

**Fig:3**

**Fig:4**

**Fig. 5**

**Fig:6**

Europäisches
Patentamt

**EUROPÄISCHER RECHERCHENBERICHT**

0063761

Nummer der Anmeldung

EP 82 10 3214.1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - B - 1 648 640 (B.J. O'CONNOR et al.) <br> * Ansprüche; Spalte 3; Fig. 1 * <br> -- | 1,7 |
| A | US - A - 3 171 033 (B.B. MATHIAS et al.) <br> * Spalten 2, 3; Fig. 1, 3, 7 * <br> ---- | 1,7 |

**KLASSIFIKATION DER ANMELDUNG (Int. Cl.·)**

G 01 B 11/24

G 01 B 11/30

G 02 B 27/17

G 01 N 21/90

**RECHERCHIERTE SACHGEBIETE (Int. Cl.·)**

G 01 B 11/00

G 01 N 21/90

G 02 B 27/17

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 26-07-1982 | KÖHN |

EPA form 1503.1   06.78